# EUROPÄISCHE PATENTANMELDUNG

(11) **EP 3 907 528 A1**
(43) Veröffentlichungstag der Anmeldung: **10.11.2021**
(21) Anmeldenummer: 21160923.5
(22) Anmeldetag: 05.03.2021
(51) Int. Cl.: G01S 7/52, G01K 11/22

(54) **ABSTANDSSENSOR**

(30) Priorität: 07.05.2020 DE 102020205758
(71) Anmelder: ContiTech Luftfedersysteme GmbH, 30165 Hannover (DE)
(72) Erfinder: Reck, Siegfried, 30419 Hannover (DE)
(74) Vertreter: Continental Corporation

(57) **Zusammenfassung**

Die vorliegende Erfindung betrifft einen Abstandssensor (1) mit wenigstens einem piezokeramischen Schallwandler (17), welcher ausgebildet ist, Schallwellen (A) durch ein Medium hindurch zu einem Messobjekt (2) hin auszusenden und reflektierte Schallwellen (A') von dem Messobjekt (2) durch das Medium hindurch zu erfassen, und mit einer Steuerungseinheit (13), welche ausgebildet ist, eine Laufzeitdifferenz zwischen dem Aussenden der Schallwellen (A) und dem Erfassen der reflektierten Schallwellen (A') zu bestimmen, wobei die Steuerungseinheit (13) ferner ausgebildet ist, aus der Laufzeitdifferenz einen Abstand (D) zwischen dem piezokeramischen Schallwandler (17) und dem Messobjekt (2) zu bestimmen. Der Abstandssensor (1) ist dadurch gekennzeichnet, dass die Steuerungseinheit (13) ferner ausgebildet ist, eine Temperatur des Mediums mittels einer temperaturabhängigen Zeitkonstante des piezokeramischen Schallwandlers (17) zu bestimmen, wobei die Steuerungseinheit (13) ferner ausgebildet ist, den Abstand (D) zwischen dem piezokeramischen Schallwandler (17) und dem Messobjekt (2) unter Berücksichtigung der bestimmten Temperatur des Mediums zu bestimmen.

## Beschreibung

Die vorliegende Erfindung betrifft einen Abstandssensor gemäß dem Oberbegriff des Patentanspruchs 1 sowie eine Abstandsmessanordnung mit einem derartigen Abstandssensor gemäß dem Patentanspruch 7.

Auf vielen technischen Gebieten ist es bekannt bzw. erforderlich, einen Abstand zwischen zwei Objekten zu kennen. Der Abstand kann auch als Entfernung bezeichnet werden. Auch können die Länge eines Objekts sowie der Abstand zwischen zwei Stellen eines Objekts von Interesse sein.

Eine derartige Messung des Abstandes zweier Punkte im Raum als Entfernungsmessung, Abstandsmessung oder Längenmessung kann durch einen direkten oder indirekten Vergleich mit einer Längenmaßeinheit wie beispielsweise dem Meter erfolgen. Derartige Messungen können als direkte Messung z.B. mittels Interferometrie oder als indirekte Messung z.B. mittels Triangulation, Laufzeitmessung oder kapazitiver Abstandsmessung erfolgen. Je nach Messprinzip, Messverfahren bzw. Messmethode können Abstände, Entfernungen bzw. Längen von der Größenordnung von Elementarteilchen bis zu Lichtjahren bestimmt werden.

Bei den Messverfahren der Laufzeitmessung werden elektromagnetische oder akustische Wellen als Messsignale mit endlicher, bekannter Geschwindigkeit zu einem Messobjekt hin ausgesendet. Das ausgesendete Signal wird von dem Messobjekt reflektiert und die Zeit, welche das Messsignal für den Hin- und Rückweg benötigt hat, als Laufzeit erfasst. Unter Berücksichtigung der Ausbreitungsgeschwindigkeit des Messsignals in dem Medium wie z.B. in der Luft kann der Abstand zwischen der Signalquelle und dem Messobjekt als Objektentfernung bestimmt werden.

Wird eine Ultraschallsignalquelle zur Erzeugung eines Ultraschallsignals verwendet und das Ultraschallsignal zum Messobjekt hin ausgesendet, so ist zu beachten, dass die Temperatur des Mediums wie z.B. der Luft einen relevanten Einfluss auf die Ausbreitungsgeschwindigkeit haben kann. Daher kann die Qualität der Abstandsmessung bzw. der Abstandsbestimmung erhöht und damit die Messgenauigkeit des Abstands verbessert werden, indem die Temperatur des Mediums parallel oder zumindest ausreichend zeitnah ebenfalls sensorisch erfasst und bei der Bestimmung der Objektentfernung berücksichtigt wird.

Hierzu können separate Temperatursensoren verwendet werden, was jedoch nachteiligerweise zu erhöhten Kosten hinsichtlich Anschaffung und bzw. oder Montage und bzw. oder zu einem erhöhten Bauraumbedarf für den Sensor selbst, dessen Auswerteelektronik und bzw. oder die Verkabelung führen kann. Wird die Auswerteelektronik des Temperatursensors in eine Steuerungseinheit oder dergleichen des Ultraschallsensors integriert, kann dies dort zu einem entsprechenden zusätzlichen Aufwand führen und bzw. oder dort einen zusätzlichen Bauraum einnehmen.

Alternativ kann ein zusätzlicher Referenzreflektor verwendet werden, um, parallel zu dem zuvor beschriebenen Aussenden des Messsignals zu dem Messobjekt, ein weiteres Referenzsignal zu dem Referenzreflektor auszusenden. Der Abstand zwischen der Ultraschallsignalquelle und dem Referenzreflektor muss dabei bekannt und unveränderlich sein. Aufgrund des bekannten, festen Abstands zwischen Ultraschallsignalquelle und Referenzreflektor kann dann aus der Laufzeit des Referenzsignals die Temperatur des Mediums bestimmt und diese dann verwendet werden, um aus der Laufzeit des Messsignals unter Berücksichtigung der bestimmten Temperatur des Mediums die Entfernung von der Ultraschallsignalquelle zum Messobjekt zu bestimmen.

Nachteilig ist auch hierbei, dass der Referenzreflektor sowie die entsprechende Auswerteelektronik und Verkabelung ebenfalls zu einem zusätzlichen Aufwand an Anschaffung und bzw. oder Montage und bzw. zu einem zusätzlichen Bauraumbedarf führen können. Insbesondere ist eine zusätzliche Strecke vorzusehen, auf welcher das Referenzsignal zwischen der Ultraschallsignalquelle und dem Referenzreflektor ungestört hin und zurück laufen kann, was insbesondere zu einen zusätzlichen Bedarf an Bauraum führen kann. Dabei kann die Genauigkeit der Bestimmung der Temperatur des Mediums aus der Laufzeit des Referenzsignals umso genauer sein, desto größer der Abstand zwischen der Ultraschallsignalquelle und dem Referenzreflektor ist, was jedoch den Platzbedarf entsprechend erhöhen kann. Auch kann das Aussenden des Referenzsignals einen zusätzlichen Aufwand im Betrieb darstellen.

Eine Aufgabe der vorliegenden Erfindung ist es, einen Abstandssensor der eingangs beschriebenen Art mit vereinfachter Bestimmung der Temperatur des Mediums bereit zu stellen. Insbesondere soll der Aufwand der elektrischen Schaltung des Abstandssensors reduziert werden. Zumindest soll eine Alternative zu derartigen bekannten Abstandssensoren geschaffen werden.

Die Aufgabe wird erfindungsgemäß durch einen Abstandssensor mit den Merkmalen gemäß Patentanspruch 1 sowie durch eine Abstandsmessanordnung mit den Merkmalen gemäß Patentanspruch 7 gelöst. Vorteilhafte Weiterbildungen sind in den Unteransprüchen beschrieben.

Somit betrifft die vorliegende Erfindung einen Abstandssensor mit wenigstens einem piezokeramischen Schallwandler, welcher ausgebildet ist, Schallwellen durch ein Medium hindurch zu einem Messobjekt hin auszusenden und reflektierte Schallwellen von dem Messobjekt durch das Medium hindurch zu erfassen, und mit einer Steuerungseinheit, welche ausgebildet ist, eine Laufzeitdifferenz zwischen dem Aussenden der Schallwellen und dem Erfassen der reflektierten Schallwellen zu bestimmen, wobei die Steuerungseinheit ferner ausgebildet ist, aus der Laufzeitdifferenz einen Abstand zwischen dem piezokeramischen Schallwandler und dem Messobjekt zu bestimmen. Unter einem piezokeramischen Schallwandler sind ein piezoelektrischer Schallwandler und insbesondere ein piezoelektrischen Ultraschallwandler mit einem keramischen piezoelektrischen Material zu versehen.

Das Aussenden der Schallwellen kann mittels des inversen Piezoeffekts erfolgen, indem das keramische piezoelektrische Material des piezokeramischen Schallwandlers mit elektrischer Spannung aufgeladen wird, sich die aufgeladene elektrische Spannung plötzlich als mechanische Verformung des keramischen piezoelektrischen Materials des piezokeramischen Schallwandlers entlädt und hierdurch eine akustische Schallwelle und ggfs. eine Ultraschallwelle im Medium wie z.B. in der Umgebungsluft erzeugt. In der umgekehrten Richtung kann die reflektierte Schallwelle eine mechanische Verformung des keramischen piezoelektrischen Materials des piezokeramischen Schallwandlers bewirken, welche zu einer elektrischen Spannung führt, welche erfasst werden kann. Dies kann als direkter Piezoeffekt bezeichnet werden.

Der Abstandssensor ist dadurch gekennzeichnet, dass die Steuerungseinheit ferner ausgebildet ist, eine Temperatur des Mediums mittels einer temperaturabhängigen Zeitkonstante des piezokeramischen Schallwandlers zu bestimmen, wobei die Steuerungseinheit ferner ausgebildet ist, den Abstand zwischen dem piezokeramischen Schallwandler und dem Messobjekt unter Berücksichtigung der bestimmten Temperatur des Mediums zu bestimmen.

Mit anderen Worten kann eine Berücksichtigung der aktuellen Temperatur des Mediums dadurch erfolgen, dass sich diese Temperatur auch auf die Bauteile des piezokeramischen Schallwandlers auswirkt und somit indirekt über die temperaturabhängigen Bauteileigenschaften des piezokeramischen Schallwandlers erfasst, bestimmt und somit als Einflussgröße bei der Abstandsbestimmung aus der Laufzeitdifferenz der Schallwellen berücksichtigt werden kann. Dies kann den entsprechenden Aufwand zur Berücksichtigung der Temperatur des Mediums verringern und insbesondere einen zusätzlichen Temperatursensor vermeiden. Dies kann sich vorteilhaft auf reduzierte Kosten in der Anschaffung und bzw. oder Montage sowie in einem reduzierten Bedarf an Bauraum auswirken.

Dabei liegt der Erfindung die Erkenntnis zugrunde, dass sich ein piezokeramischer Schallwandler, d.h. ein piezoelektrischer Schallwandler mit einem keramischen Piezoelement, elektrisch wie eine Kapazität mit einem hochohmigen Ableitwiderstand verhält. Diese beiden Ersatzkomponenten definieren eine Zeitkonstante in der Form Kapazität mal ohmschen Widerstand, welche für das Laden bzw. für das Entladen des piezokeramischen Schallwandlers gilt.

Im Gegensatz zu dem ohmschen Widerstand des Ableitwiderstands, welcher im Wertebereich der relevanten Temperaturen bzw. Temperaturänderungen üblicher Anwendungen als konstant bzw. als stabil angesehen werden kann, ist die Dielektrizitätskonstante der Kapazität des keramischen piezoelektrischen Materials des piezokeramischen Schallwandlers signifikant temperaturabhängig und geht linear in diese Zeitkonstante ein, so dass die Dielektrizitätskonstante der Kapazität genutzt werden kann, um die Temperatur des keramischen piezoelektrischen Materials des piezokeramischen Schallwandlers zu bestimmen. Die Zeitkonstante des keramischen piezoelektrischen Materials des piezokeramischen Schallwandlers ergibt sich dabei als Produkt aus der Kapazität des Kondensators und dem ohmschen Widerstand des Ableitwiderstands. Da bei der Verwendung des Abstandssensors, sofern sich das keramische piezoelektrische Materials des piezokeramischen Schallwandlers der Umgebungstemperatur des Mediums angepasst hat, die Temperatur des Mediums wie z.B. der Umgebungsluft der Temperatur des keramischen piezoelektrischen Materials des piezokeramischen Schallwandlers entspricht, kann die Temperatur des Mediums somit mittels der Dielektrizitätskonstante der Kapazität des keramischen piezoelektrischen Materials des piezokeramischen Schallwandlers bestimmt und verwendet werden.

Gemäß einem Aspekt der Erfindung ist die Steuerungseinheit ferner ausgebildet, wenigstens einen zeitlichen Verlauf eines Ladestroms des piezokeramischen Schallwandlers zu erfassen, wobei die Steuerungseinheit ferner ausgebildet ist, die Temperatur des Mediums aus dem wenigstens einen zeitlichen Verlauf des Ladestroms des piezokeramischen Schallwandlers und bzw. oder aus wenigstens einem Extremwert des wenigstens einen zeitlichen Verlaufs des Ladestroms des piezokeramischen Schallwandlers zu bestimmen. Auf diese Art und Weise können der zeitliche Verlauf und bzw. oder wenigstens ein Extremwert wie z.B. ein Maximum und bzw. oder ein Minimum des zeitlichen Verlaufs verwendet werden, um die zuvor beschriebene Temperaturabhängigkeit des keramischen piezoelektrischen Materials des piezokeramischen Schallwandlers aus dem Ladestrom bestimmen zu können.

Gemäß einem weiteren Aspekt der Erfindung ist der Abstandssensor ausgebildet, den piezokeramischen Schallwandler mehrfach elektrisch aufzuladen, um die Schallwellen auszusenden, wobei die Steuerungseinheit ferner ausgebildet ist, die zeitlichen Verläufe des Ladestroms mehrerer Aufladevorgänge des piezokeramischen Schallwandlers zu erfassen, wobei die Steuerungseinheit ferner ausgebildet ist, die Temperatur des Mediums aus den zeitlichen Verläufen des Ladestroms mehrerer Aufladevorgänge des piezokeramischen Schallwandlers und bzw. oder aus den Extremwerten der zeitlichen Verläufe des Ladestroms mehrerer Aufladevorgänge des piezokeramischen Schallwandlers zu bestimmen.

Hierdurch kann die zuvor beschriebene Bestimmung der Temperatur des Mediums über die temperaturabhängige Dielektrizitätskonstante der Kapazität des keramischen piezoelektrischen Materials des piezokeramischen Schallwandlers basierend auf mehreren zeitlichen Verläufen und bzw. oder basierend auf mehreren Extremwerten des Ladestroms des piezokeramischen Schallwandlers erfolgen, was die Genauigkeit der Temperaturbestimmung erhöhen kann. Diese kann umso genauer ausfallen, desto mehr zeitliche Verläufe und bzw. oder Extremwerte des Ladestroms des piezokeramischen Schallwandlers berücksichtigt werden. Dies kann beispielsweise durch eine Mittelwertbildung erfolgen.

Gemäß einem weiteren Aspekt der Erfindung ist die Steuerungseinheit ferner ausgebildet ist, den wenigstens einen zeitlichen Verlauf des Ladestroms des piezokeramischen Schallwandlers und bzw. oder den wenigstens einen Extremwert des wenigstens einen zeitlichen Verlaufs des Ladestroms des piezokeramischen Schallwandlers mit einer Mehrzahl von vorbestimmten temperaturabhängigen zeitlichen Verläufen des Ladestroms des piezokeramischen Schallwandlers und bzw. oder mit einer Mehrzahl von vorbestimmten Extremwerten des zeitlichen Verlaufs des Ladestroms des piezokeramischen Schallwandlers zu vergleichen, wobei die Steuerungseinheit ferner ausgebildet ist, die Temperatur des Mediums aus dem wenigstens einen zeitlichen Verlauf des Ladestroms des piezokeramischen Schallwandlers und bzw. oder aus dem wenigstens einen Extremwert des wenigstens einen zeitlichen Verlaufs des Ladestroms des piezokeramischen Schallwandlers durch eine bestmögliche Übereinstimmung mit einem der vorbestimmten temperaturabhängigen zeitlichen Verläufe des Ladestroms des piezokeramischen Schallwandlers und bzw. oder mit einem der vorbestimmten Extremwerte des wenigstens einen zeitlichen Verlaufs des Ladestroms des piezokeramischen Schallwandlers zu bestimmen.

Hierzu können beispielsweise für das verwendete keramische piezoelektrische Material des piezokeramischen Schallwandlers für mehrere repräsentative bzw. relevante Temperaturen die zeitlichen Verläufe und bzw. oder die Extremwerte des Ladestroms des piezokeramischen Schallwandlers z.B. unter Laborbedingungen möglichst genau erfasst und z.B. als Wertetabellen, als Funktionen und dergleichen in der Steuerungseinheit bzw. in einem Speicherelement des Abstandssensors bzw. der Steuerungseinheit hinterlegt werden. Die erfassten zeitlichen Verläufe und bzw. oder die Extremwerte des Ladestroms des piezokeramischen Schallwandlers können dann bei der Verwendung mit diesen hinterlegten Informationen verglichen werden. Je nach dem Grad der Übereinstimmung von hinterlegten und erfassten Informationen können die erfassten Daten des Ladestroms des piezokeramischen Schallwandlers einer hinterlegten Information zugeordnet und somit die Temperatur des Mediums bestimmt werden. Dies kann eine einfache und bzw. oder verlässliche Art und Weise der Bestimmung der Temperatur des Mediums sein.

Gemäß einem weiteren Aspekt der Erfindung weist der Abstandssensor wenigstens einen Strommesswiderstand auf, welcher, vorzugsweise in Reihe mit dem piezokeramischen Schallwandler, angeordnet und ausgebildet ist, den Ladestrom des piezokeramischen Schallwandlers für die Steuerungseinheit messtechnisch erfassbar zu machen. Dies kann über die elektrische Spannung erfolgen, welche aufgrund des elektrischen Ladestroms über den Strommesswiderstand abfallen kann. Der Strommesswiderstand kann auch als Shunt-Widerstand bezeichnet werden. Diese elektrische Spannung kann dann von der Steuerungseinheit erfasst und über den bekannten ohmschen Widerstand des Strommesswiderstands in einen entsprechenden elektrischen Ladestrom des piezokeramischen Schallwandlers umgerechnet und somit bestimmt werden. Dies kann eine einfache, genaue und bzw. oder verlässliche Möglichkeit darstellen, den Ladestrom des piezokeramischen Schallwandlers zu bestimmen.

Gemäß einem weiteren Aspekt der Erfindung ist der piezokeramische Schallwandler ausgebildet und angeordnet ist, in direktem berührendem Kontakt mit dem Medium zu stehen. Dies kann dafür sorgen bzw. es begünstigen, dass das keramische piezoelektrische Material des piezokeramischen Schallwandlers dieselbe Temperatur aufweist wie das Medium. Insbesondere kann eine Veränderung der Temperatur des Mediums hierdurch möglichst unverzüglich zu einer entsprechenden Temperaturanpassung des keramischen piezoelektrischen Materials des piezokeramischen Schallwandlers führen, so dass auch in diesem Fall von der Temperatur des keramischen piezoelektrischen Materials des piezokeramischen Schallwandlers auf die Temperatur des Mediums geschlossen werden kann. Dies kann die Genauigkeit der Bestimmung der Temperatur des Mediums begünstigen.

Die Erfindung betrifft auch eine Abstandsmessanordnung mit einem Abstandssensor wie zuvor beschrieben und mit einem Messobjekt, welches in einem Abstand zum Abstandssensor angeordnet ist, um ausgehende Schallwellen des Abstandssensors zu erhalten und als reflektierte Schallwellen zum Abstandssensor zurückzusenden. Auf diese Art und Weise kann ein erfindungsgemäßer Abstandssensor zur Bestimmung eines Abstands verwendet und die entsprechenden Eigenschaften und Vorteile des Abstandssensors umgesetzt und genutzt werden.

Ein Ausführungsbeispiel und weitere Vorteile der Erfindung werden nachstehend im Zusammenhang mit den folgenden Figuren erläutert. Darin zeigt:
- Fig. 1: eine schematische Darstellung einer erfindungsgemäßen Abstandsmessanordnung;
- Fig. 2: eine Prinzipschaltung eines erfindungsgemäßen Abstandssensors; und
- Fig. 3: zwei beispielhafte Verläufe elektrischer Spannungen über der Zeit bei mehreren aufeinanderfolgenden Aufladevorgängen für zwei unterschiedliche Temperaturen.

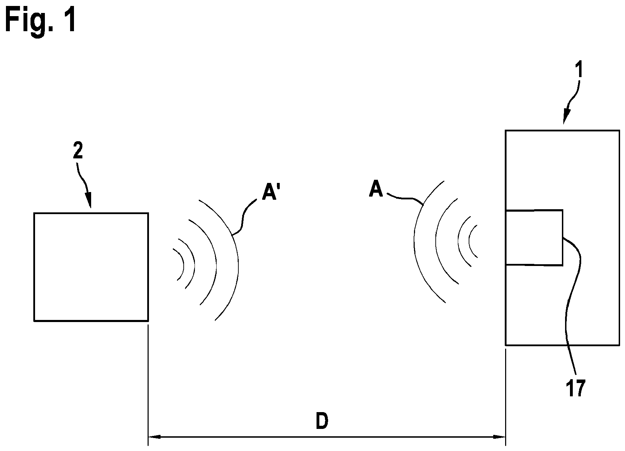

Eine erfindungsgemäße Abstandsmessanordnung 1, 2 weist einen erfindungsgemäßen Abstandssensor 1 und ein Messobjekt 2 auf. Der Abstandssensor 1 ist in einem Abstand D zum Messobjekt 2 angeordnet. Der Abstandssensor 1 weist einen piezokeramischen Schallwandler 17, d.h. einen piezoelektrischen bzw. piezokeramischen Schallwandler 17 mit einem keramischen piezoelektrischen Material, auf, welcher zum Messobjekt 2 hin ausgerichtet ist. Von dem piezokeramischen Schallwandler 17 können Schallwellen A mittels des inversen Piezoeffekts zum Messobjekt 2 durch die Umgebungsluft als Medium ausgesendet werden. Die ausgesendeten Schallwellen A können vom Messobjekt 2 reflektiert und teilweise als reflektierte Schallwellen A' zum piezokeramischen Schallwandler 17 des Abstandssensors 1 wieder zurückgesendet sowie vom dem piezokeramischen Schallwandler 17 mittels des direkten Piezoeffekts sensorisch erfasst werden, siehe Figur 1. Aus der Laufzeit der Schallwellen A, A' kann seitens des Abstandssensors 1 der Abstand D bestimmt werden.

Da die Temperatur des Mediums insbesondere dann, wenn die Schallwellen A, A' im Ultraschallbereich erzeugt werden, eine signifikanten Einfluss auf die Ausbreitungsgeschwindigkeit der Schallwellen A, A' im Medium wie z.B. in der Umgebungsluft und damit auch auf die Genauigkeit des bestimmten Abstands D zwischen dem piezokeramischen Schallwandler 17 des Abstandssensors 1 und dem Messobjekt 2 haben kann, kann ferner die Temperatur des Mediums bestimmt und bei der Bestimmung des Abstands D berücksichtigt werden. Dies kann die Genauigkeit des bestimmten Abstands D erhöhen.

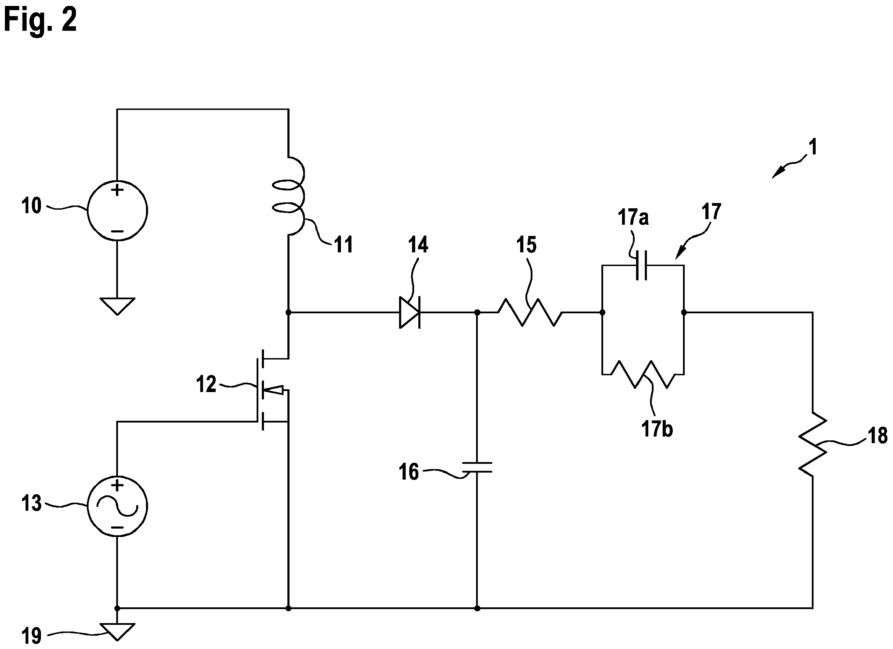

Erfindungsgemäß kann dies beispielsweise gemäß der Prinzipschaltung der Figur 2 umgesetzt werden. Der piezokeramische Schallwandler 17 wird für eine nachfolgende Stoßentladung aufgeladen, um mittels der Stoßentladung eine Anregung von Eigenschwingungen des keramischen piezoelektrischen Materials des piezokeramischen Schallwandlers 17 zu erzeugen, welche zum zuvor beschriebenen Aussenden der Schallwellen A führen. Eine Steuerungseinheit 13 in Form eines Micro-Controllers 13, welche auch die Messung der Laufzeit der Schallwellen A, A' sowie die Bestimmung des Abstands D durchführt, übernimmt ferner die Bestimmung der Temperatur des Mediums. Hierzu wird von der Steuerungseinheit 13 die Phase genutzt, in welcher der piezokeramische Schallwandler 17 elektrisch aufgeladen wird.

Zur elektrischen Aufladung des piezokeramischen Schallwandlers 17 schließt die Steuerungseinheit 13 einen elektronischen Schalter 12, so dass Gleichstrom von einer Spannungsquelle 10 durch eine Induktivität 11 fließt. Wenn der elektronische Schalter 12 anschließend wieder geöffnet wird, entsteht über der Induktivität 11 eine Selbstinduktionsspannung, welche einen Gleichstrom durch eine Diode 14 treibt und hierdurch einen Speicherkondensator 16 auflädt. Von dem Speicherkondensator 16 fließen elektrische Ladungen über einen Begrenzungswiderstand 15 auf den piezoelektrischen Schallwandler 17 und laden den piezokeramischen Schallwandler 17 elektrisch auf. Dieser Ladezyklus wird wiederholt, bis an dem piezokeramischen Schallwandler 17 die Sendespannung anliegt, welche für das nächste Aussenden der Schallwellen A erforderlich bzw. geeignet ist.

Das keramische piezoelektrische Material des piezokeramischen Schallwandlers 17 lässt sich dabei elektrisch wie die Parallelschaltung eines Kondensators 17a mit einem hochohmigen Ableitwiderstand 17b betrachten. Der Kondensator 17a und der Ableitwiderstand 17b definieren eine Zeitkonstante des piezokeramischen Schallwandlers 17 in der Form der Kapazität des Kondensators 17a multipliziert mit dem ohmschen Widerstand des Ableitwiderstands 17b. Diese Zeitkonstante gilt für das Aufladen bzw. für das Entladen des piezokeramischen Schallwandlers 17. Über die Dielektrizitätskonstante des Kondensators 17a des piezokeramischen Schallwandlers 17 geht die Temperatur des Mediums, welche zumindest nach ausreichend langer Zeit der Temperatur des keramischen piezoelektrischen Materials des piezokeramischen Schallwandlers 17 entspricht, linear in die Zeitkonstante des piezokeramischen Schallwandlers 17 ein. Somit kann die Temperatur des Mediums mittels der Zeitkonstante des piezokeramischen Schallwandlers 17 von der Steuerungseinheit 13 bestimmt werden.

Hierzu weist der Abstandssensor 1 einen Strommesswiderstand 18 auf, welcher auch als Shunt-Widerstand 18 bezeichnet werden kann. Der Shunt-Widerstand 18 ist in Reihe zu dem piezokeramischen Schallwandler 17 angeordnet. Ferner weist der Abstandssensor 1 eine Erdung 19 auf.

Über den Shunt-Widerstand 18 fällt bei jedem Ladezyklus eine einem Ladestrom des piezokeramischen Schallwandlers 17 proportionale Spannung ab, welche von der Steuerungseinheit 13 erfasst und über der Zeit aufgenommen werden kann. Dabei ist die Spannung über den Shunt-Widerstand 18 umso höher, je höher die Anzahl der Ladezyklen ist, d.h. je mehr Aufladezyklen wie zuvor beschrieben ausgeführt werden, umso größer ist die Spannung über den Shunt-Widerstand 18 und damit auch die Anzahl der elektrischen Ladungen, welche im piezokeramischen Schallwandler 17 zur Erzeugung der Schallwellen A gespeichert sind. Entsprechend kleiner ist der Maximalwert des Ladestroms durch den piezokeramischen Schallwandler 17.

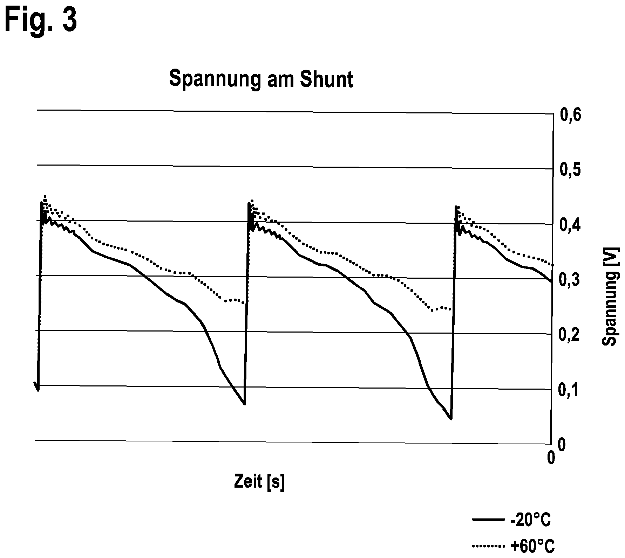

Der zeitliche Verlauf des Ladestroms des piezokeramischen Schallwandlers 17 und seine Extremwerte sind, wie zuvor bereits beschrieben, von der temperaturveränderlichen Zeitkonstante des piezokeramischen Schallwandlers 17 abhängig. Um diese Zeitkonstante zur Bestimmung der Temperatur des keramischen piezoelektrischen Materials des piezokeramischen Schallwandlers 17 und damit auch zur Bestimmung der Temperatur des Mediums zu verwenden, wurde zuvor die Temperaturgänge bzw. die Temperaturverläufe des verwendeten piezoelektrischen Werkstoffs des piezokeramischen Schallwandlers 17 für verschiedene relevante Temperaturen messtechnisch z.B. unter Laborbedingungen ermittelt und z.B. als Datentabelle oder als Funktion der Temperatur in einem Festwertspeicher der Steuerungseinheit 13 hinterlegt, d.h. gespeichert. Beispielhaft gemessene Spannungsverläufe für -20°C und +60°C sind der Figur 3 zu entnehmen.

Dabei kann die Steuerungseinheit 13 mittels eines integrierten Analog-/Digitalwandlers (nicht dargestellt) die Maximalwerte des Ladestroms des piezokeramischen Schallwandlers 17 aller Zyklen eines Aufladevorgangs des piezokeramischen Schallwandlers 17 erfassen und hieraus die aktuelle Temperatur des piezokeramischen Schallwandlers 17 bestimmen. Diese aktuelle Temperatur kann dann bei der Bestimmung des Abstands D verwendet werden.

### Bezugszeichenliste (Teil der Beschreibung)

- A: ausgesendete Schallwellen
- A': reflektierte Schallwellen
- D: Abstand zwischen piezokeramischem Schallwandler 17 und Messobjekt 2

- 1: Abstandssensor
- 10: Spannungsquelle
- 11: Induktivität
- 12: elektronischer Schalter
- 13: Steuerungseinheit; Micro-Controller
- 14: Diode
- 15: Begrenzungswiderstand
- 16: Speicherkondensator
- 17: piezokeramischer Schallwandler
- 17a: Kondensator des piezokeramischen Schallwandlers 17
- 17b: Ableitwiderstand des piezokeramischen Schallwandlers 17
- 18: Strommesswiderstand; Shunt-Widerstand
- 19: Erdung

- 2: Messobjekt

## Patentansprüche

1. Abstandssensor (1)
mit wenigstens einem piezokeramischen Schallwandler (17), welcher ausgebildet ist,
Schallwellen (A) durch ein Medium hindurch zu einem Messobjekt (2) hin auszusenden und
reflektierte Schallwellen (A') von dem Messobjekt (2) durch das Medium hindurch zu erfassen, und
mit einer Steuerungseinheit (13), welche ausgebildet ist, eine Laufzeitdifferenz zwischen dem Aussenden der Schallwellen (A) und dem Erfassen der reflektierten Schallwellen (A') zu bestimmen,
wobei die Steuerungseinheit (13) ferner ausgebildet ist, aus der Laufzeitdifferenz einen Abstand (D) zwischen dem piezokeramischen Schallwandler (17) und dem Messobjekt (2) zu bestimmen,
**dadurch gekennzeichnet, dass**
die Steuerungseinheit (13) ferner ausgebildet ist, eine Temperatur des Mediums mittels einer temperaturabhängigen Zeitkonstante des piezokeramischen Schallwandlers (17) zu bestimmen,
wobei die Steuerungseinheit (13) ferner ausgebildet ist, den Abstand (D) zwischen dem piezokeramischen Schallwandler (17) und dem Messobjekt (2) unter Berücksichtigung der bestimmten Temperatur des Mediums zu bestimmen.

2. Abstandssensor (1) nach Anspruch 1, **dadurch gekennzeichnet, dass**
die Steuerungseinheit (13) ferner ausgebildet ist, wenigstens einen zeitlichen Verlauf eines Ladestroms des piezokeramischen Schallwandlers (17) zu erfassen,
wobei die Steuerungseinheit (13) ferner ausgebildet ist, die Temperatur des Mediums
aus dem wenigstens einen zeitlichen Verlauf des Ladestroms des piezokeramischen Schallwandlers (17) und/oder
aus wenigstens einem Extremwert des wenigstens einen zeitlichen Verlaufs des Ladestroms des piezokeramischen Schallwandlers (17)
zu bestimmen.

3. Abstandssensor (1) nach Anspruch 1 oder 2, **dadurch gekennzeichnet, dass**
der Abstandssensor (1) ausgebildet ist, den piezokeramischen Schallwandler (17) mehrfach elektrisch aufzuladen, um die Schallwellen auszusenden, wobei die Steuerungseinheit (13) ferner ausgebildet ist, die zeitlichen Verläufe des Ladestroms mehrerer Aufladevorgänge des piezokeramischen Schallwandlers (17) zu erfassen,
wobei die Steuerungseinheit (13) ferner ausgebildet ist, die Temperatur des Mediums
aus den zeitlichen Verläufen des Ladestroms mehrerer Aufladevorgänge des piezokeramischen Schallwandlers (17) und/oder
aus den Extremwerten der zeitlichen Verläufe des Ladestroms mehrerer Aufladevorgänge des piezokeramischen Schallwandlers (17)
zu bestimmen.

4. Abstandssensor (1) nach Anspruch 2 oder 3, **dadurch gekennzeichnet, dass**
die Steuerungseinheit (13) ferner ausgebildet ist,
den wenigstens einen zeitlichen Verlauf des Ladestroms des piezokeramischen Schallwandlers (17) und/oder
den wenigstens einen Extremwert des wenigstens einen zeitlichen Verlaufs des Ladestroms des piezokeramischen Schallwandlers (17) mit einer Mehrzahl von vorbestimmten temperaturabhängigen zeitlichen Verläufen des Ladestroms des piezokeramischen Schallwandlers (17) und/oder
mit einer Mehrzahl von vorbestimmten Extremwerten des zeitlichen Verlaufs des Ladestroms des piezokeramischen Schallwandlers (17)
zu vergleichen,
wobei die Steuerungseinheit (13) ferner ausgebildet ist, die Temperatur des Mediums
aus dem wenigstens einen zeitlichen Verlauf des Ladestroms des piezokeramischen Schallwandlers (17) und/oder
aus dem wenigstens einen Extremwert des wenigstens einen zeitlichen Verlaufs des Ladestroms des piezokeramischen Schallwandlers (17)
durch eine bestmögliche Übereinstimmung
mit einem der vorbestimmten temperaturabhängigen zeitlichen Verläufe des Ladestroms des piezokeramischen Schallwandlers (17)
und/oder mit einem der vorbestimmten Extremwerte des wenigstens einen zeitlichen Verlaufs des Ladestroms des piezokeramischen Schallwandlers (17)
zu bestimmen.

5. Abstandssensor (1) nach einem der Ansprüche 2 bis 4, **gekennzeichnet durch**
wenigstens einen Strommesswiderstand (18), welcher, vorzugsweise in Reihe mit dem piezokeramischen Schallwandler (17), angeordnet und ausgebildet ist, den Ladestrom des piezokeramischen Schallwandlers (17) für die Steuerungseinheit (13) messtechnisch erfassbar zu machen.

6. Abstandssensor (1) nach einem der vorangehenden Ansprüche, **dadurch gekennzeichnet, dass**
der piezokeramische Schallwandler (17) ausgebildet und angeordnet ist, in direktem berührendem Kontakt mit dem Medium zu stehen.

7. Abstandsmessanordnung (1, 2)
mit einem Abstandssensor (1) nach einem der vorangehenden Ansprüche und
mit einem Messobjekt (2), welches in einem Abstand (D) zum Abstandssensor (1) angeordnet ist, um ausgehende Schallwellen (A) des Abstandssensors (1) zu erhalten und als reflektierte Schallwellen (A') zum Abstandssensor (1) zurückzusenden.
